# EUROPEAN PATENT APPLICATION

(11) **EP 1 959 608 A1**
(43) Date of publication of application: **20.08.2008**
(21) Application number: 06817945.6
(22) Date of filing: 04.12.2006
(51) Int. Cl.: H04L 12/18

(54) **A METHOD, A APPLICATION SERVER AND A SYSTEM FOR IMPLEMENTING THE THIRD PARTY CONTROL SERVICE**

(30) Priority: 03.12.2005 CN 200510102141; 06.06.2006 CN 200610060914
(71) Applicant: Huawei Technologies Co., Ltd., Longgang District Shenzhen 518129 (CN)
(72) Inventor: SHI, Youzhu, Guangdong 518129 (CN)
(74) Representative: Lord, Michael
(86) International application number: PCT/CN2006/003268
(87) International publication number: WO 2007/062609

(57) **Abstract**

A method, application server (AS) and system for implementing third-party control services. In the present invention, a service subscriber already sets up a call relation, and the AS handling the service acts as a back-to-back user agent (B2BUA) and resides in the call signaling path; the service subscriber originates an operation of the third-party control service; the AS receives the service operation information which contains a first dialog identifier and a third party identifier of the call, and locates a first dialog that corresponds to the first dialog identifier and needs to be redirected according to the B2BUA mechanism; according to the third party identifier, the AS redirects the first dialog that needs to be redirected, thus finishing the service processing. The invention implements the CONF service and the ECT service even if the MGCF does not support the SIP REFER message, thus simplifying the service implementation process and facilitating service promotion.

## Description

This application claims a priority from the Chinese Patent Application No. 200510102141.5, filed with the Chinese Patent Office on December 3, 2005, and entitled "Method for Implementing Third-Party Control Services"; and the Chinese Patent Application No. 200610060914.2, filed with the Chinese Patent Office on June 6, 2006, and entitled "Method for Implementing Third-Party Control Services", the contents of which are incorporated herein by reference in their entirety.

### Field of the Invention

The present invention relates to a third party control service in a packet-switched network (PSN), and in particular, to a method, application server and system for implementing third party control services.

### Background of the Invention

Currently, with maturity of packet switching (PS) technologies, the circuit switching (CS)-based traditional telecom networks evolve into PS-based broadband telecom networks, and one technical trend is to use the Session Initiation Protocol (SIP) for call control signaling of the PS telecom core network. In this new PS telecom network, new PS terminals (namely, SIP terminals) will gradually replace the traditional telephone terminals.

In the next generation network (NGN), the services with traditional service features and available to the SIP terminal users are collectively called "public switched telephone network/integrated services digital network (PSTN/ISDN) simulation services", for example, conference (CONF) service, and explicit communication transfer (ECT) service.

The CONF service enables a user to join and control a conversation which involves multiple users, and the ECT service enables a party in a conversation to forward the conversation to a third party.

In the CONF service implementation process in the prior art, a user may invite another user who is already in a dialog with him/her to join a conference. To implement this function, the user may send a SIP REFER message (SIP reference information message). In the SIP REFER message, the conference identifier is set in the request-uniform resource identifier (Request-URI) indicating the request destination; the identifier of the invited user is set in the Refer-To parameter indicating a reference destination, and the terminal of the invited user in a dialog with the inviting user needs to be identified through a globally routable user agent URI in Refer-To when the invited user has more than one registered terminal; the Method parameter of Refer-To is set to INVITE; the Replaces parameter sets the identifier of an existing dialog between the two users, indicating that this dialog will be replaced by the new dialog set up between the conference and the invited user.

According to the conference identifier set in the Request-URI, this SIP REFER message is routed to an application server (AS) handling the CONF service. According to the contents set in the SIP REFER message, the AS sends a SIP INVITE message to the invited user (terminal), and this SIP INVITE message carries the Replaces parameter carried in the SIP REFER message so that a new dialog is set up between the conference and the invited user (terminal). Meanwhile, the invited user (terminal) releases the existing dialog between the two users according to the Replaces parameter in the SIP INVITE message.

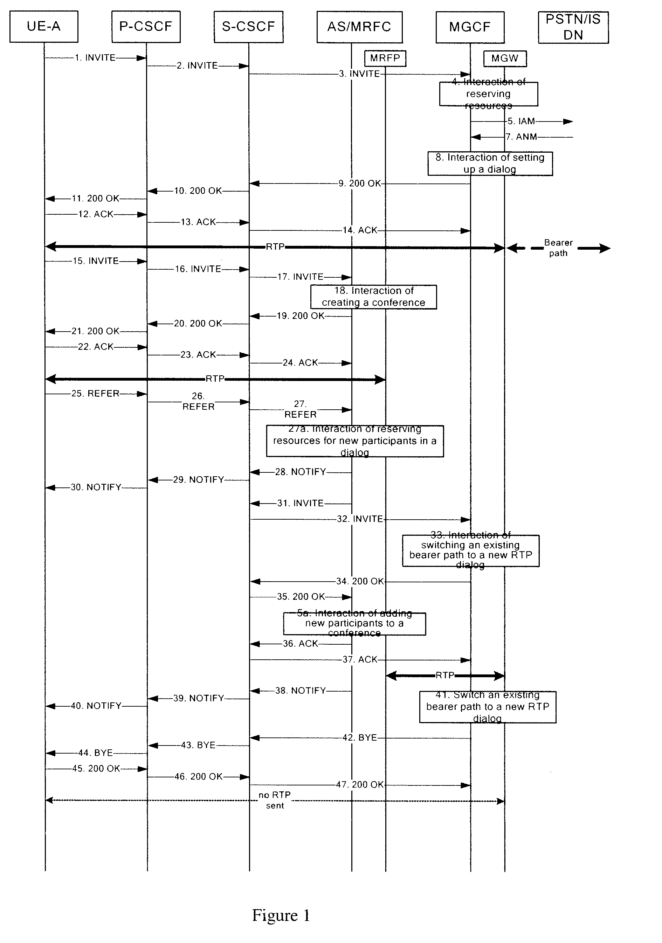

The signaling process of a CONF service in the prior art is illustrated in Figure 1.
Step 1: User Equipment-A(UE-A)originates a dialog to call a PSTN/ISDN user.
Steps 2-14: Under the cooperation of multiple network devices such as P-CSCF, S-CSCF, AS and MGCF in the network , the dialog between UE-A and the PSTN/ISDN user is set up successfully, and the conversation begins.
Step 15: UE-A requests to create a conference, and originates a dialog to the AS handling the conference service.
Steps 16-24: Under the cooperation of multiple network devices such as P-CSCF, S-CSCF and AS in the network, the conference requested by UE-A is created successfully.
Step 25: UE-A invites the PSTN/ISDN user who is talking with him/her to join the conference, and sends a SIP REFER message to the AS handling the conference service.
Steps 26-27a: The SIP REFER message arrives at the AS handling the conference service.
Steps 28-30: The AS sends a SIP NOTIFY message, notifying UE-A that the SIP REFER message is received.
Step 31: According to the contents set in the received SIP REFER message, the AS handling the conference service originates a dialog to the PSTN/ISDN user, and sends a SIP INVITE message.
Steps 32-37: Because the PSTN/ISDN user is a traditional CS domain user, the interworking call between the CS domain and the PS domain is handled through the media gateway control function (MGCF). Specifically, a SIP INVITE message is sent to the MGCF, and the MGCF creates a dialog between the user and the conference and lets the PSTN/ISDN user join the conference.
Steps 38-41: The AS handling the conference service sends a SIP NOTIFY message, notifying UE-A that the operation requested by the SIP REFER message succeeds.
Steps 42-47: According to the Replaces parameter in the SIP INVITE message, the MGCF releases the dialog specified by the Dialog identifier in the Replaces parameter, namely, the existing dialog between UE-A and the PSTN/ISDN user.

In the ECT service implementation process in the prior art, when dialogs are set up between user B and user A and user C, user B may use the new dialog set up between user A and user C, and quit the existing two dialogs. To implement this function, user B may send a SIP REFER message to user A. In the SIP REFER message, the Request-URI that indicates the request destination sets the identifier of user A; the Refer-To parameter that indicates a reference destination sets the identifier of user C, and the terminal of user C in a dialog with user B may be identified through GRUU in Refer-To when user C has more than one registered terminal; the Method parameter of Refer-To is set to INVITE; the Replaces parameter sets the identifier of the existing dialog between user B and user C, indicating that the dialog will be replaced by a new dialog set up between user C and user A; the Target-Dialog parameter sets the identifier of the existing dialog between user B and user A.

After receiving this SIP REFER message, user A confirms through the Target-Dialog information in the message that it is a call transfer request sent by user B talking with him/her, and sends a SIP INVITE message to user C (terminal). This SIP INVITE message carries the Replaces parameter carried in the SIP REFER message so that a new dialog is set up between user A and user C. Meanwhile, according to the Replaces parameter in the SIP INVITE message, user C releases the existing dialog with user B. After a new dialog is set up between user A and user C, user B releases the existing dialog between user B and user A.

In summary, the CONF and ECT service implementation processes in the prior art have common features: The user uses a SIP REFER message to originate a service operation request. The SIP REFER message uses GRUU to identify the terminal in a dialog with the user who originates a service operation request, and uses Replaces to indicate the dialog to be replaced and released. The operation in the SIP REFER message needs to be supported by the user terminal involved in the service or the corresponding MGCF.

The foregoing common features lead to common defects of the CONF and ECT service implementation processes:

First, in an interworking scenario, for the ECT service, the MGCF needs to handle the SIP REFER message. In this case, the MGCF is equivalent to a SIP user agent (UA), but a traditional MGCF only handles calls between the PS domain and the CS domain, and cannot handle services as a SIP UA. If the MGCF keeps unchanged, the prior art is unable to meet the service implementation process in an interworking scenario.

Second, special requirements are imposed on other user terminals involved in the service in addition to the user terminal that originates the service operation request. Such users may not subscribe to the CONF/ECT service. If such user terminals do not support REFER/Refer-To, Replaces or Target-Dialog operation, the user who subscribes to the CONF/ECT service is still unable to apply the service successfully.

Moreover, the GRUU mechanism has not been applied widely by now. If the user terminal subscribing to the CONF/ECT service does not support the GRUU mechanism, the service application will fail. In conclusion, the defects of the prior art are:

The operation in the SIP REFER message originated by a subscriber is required to be sent to other user terminals involved in the service, thus imposing special requirements on such user terminals and the MGCF with respect to service support.

Therefore, the prior art needs further improvement and development.

### Summary of the Invention

The present invention provides a method, application server and system for implementing third party control services, imposes no special requirements on other user terminals involved in the service, and simplifies the service implementation process.

In one embodiment of the invention, a method for implementing third party control services includes:
by an AS handling the service, receiving service operation information corresponding to the operation of a third party control service originated by a service subscriber, the service operation information including a first dialog identifier and a third party identifier of the call set up by the subscriber;
locating a first dialog that corresponds to the first dialog identifier and needs to be redirected, according to a back-to-back user agent (B2BUA) mechanism; and
redirecting the first dialog that needs to be redirected, according to the third party identifier.

In another embodiment of the invention, an AS includes: a service operation information parsing unit, adapted to parse the received service operation information including a first dialog identifier and a third party identifier; a dialog locating unit, adapted to locate a first dialog that corresponds to the first dialog identifier and needs to be redirected according to a B2BUA mechanism; and a redirecting unit, adapted to redirect the first dialog that needs redirection according to the third party identifier.

In still another embodiment of the invention, a packet-switched network system includes: a third party entity, a peer entity that is already in a call with a service subscriber, and an AS handling the service in the signaling path of the call.

The AS includes: a service operation information parsing unit, adapted to parse the received service operation information including a first dialog identifier and a third party identifier; a dialog locating unit, adapted to locate a first dialog that corresponds to the first dialog identifier and needs to be redirected according to a B2BUA mechanism; and a redirecting unit, adapted to redirect the first dialog that needs redirection according to a third party identifier.

In embodiments of the invention, the AS handling the CONF or ECT service acts as a B2BUA and resides in the signaling path of the call of the service subscriber beforehand, intercepts the SIP REFER operation originated by the service subscriber, and implements the CONF and ECT services through the redirection technology. Therefore, the MGCF does not need to support the SIP REFER message, no special requirements are imposed on other user terminals involved in the service, and no GRUU mechanism is required, thus simplifying the service implementation process and facilitating service promotion.

### Brief Description of the Drawings

Figure 1 shows a CONF service implementation process based on the prior art;
Figure 2 shows the flowchart of the first embodiment of the present invention;
Figure 3 shows the flowchart of the second embodiment of the present invention;
Figure 4 shows the flowchart of the third embodiment of the present invention;
Figure 5 shows the flowchart of the fourth embodiment of the present invention;
Figure 6 is a block diagram of the packet-switched network system in an embodiment of the present invention;
Figure 7 is a block diagram of an embodiment of the AS shown in Figure 6; and
Figure 8 is a block diagram of another embodiment of the AS shown in Figure 6.

### Detailed Description of the Invention

The present invention is hereinafter described in detail through some exemplary embodiments by reference to the accompanying drawings.

Embodiments of the invention put forward a process of implementing the CONF and ECT services. As a third party control service process, the service implementation process does not require the MGCF to support the SIP REFER message; imposes no special requirements on other user terminals involved in the service, for example, no need of supporting the REFER operation, the Refer-To parameter, the Replaces parameter or the Target-Dialog parameter, and only needs of supporting the basic SIP mechanism; and does not require use of the GRUU mechanism. In the service implementation process, a service subscriber uses a SIP REFER message to originate a service operation request; the subscriber's AS handling the CONF/ECT service acts as a back-to-back user agent (B2BUA) and resides in the signaling path of the subscriber beforehand, intercepts the SIP REFER message, and implements the service processing through the redirection technology.

In other words, the subscriber's AS handling the CONF/ECT service acts as a B2BUA and resides in the signaling path of the subscriber beforehand, and does not send the SIP REFER message to other user terminals involved in the service after receiving the message, but implements the service processing through the redirection technology according to the path information in the SIP REFER message.

The following describes the processes of implementing the CONF and ECT services through some exemplary embodiments of the invention. It should be noted that the drawings and descriptive texts therein made for the embodiments of the invention are for interpreting only, and do not represent a complete call and service control process or demonstrate all possible branch processes.

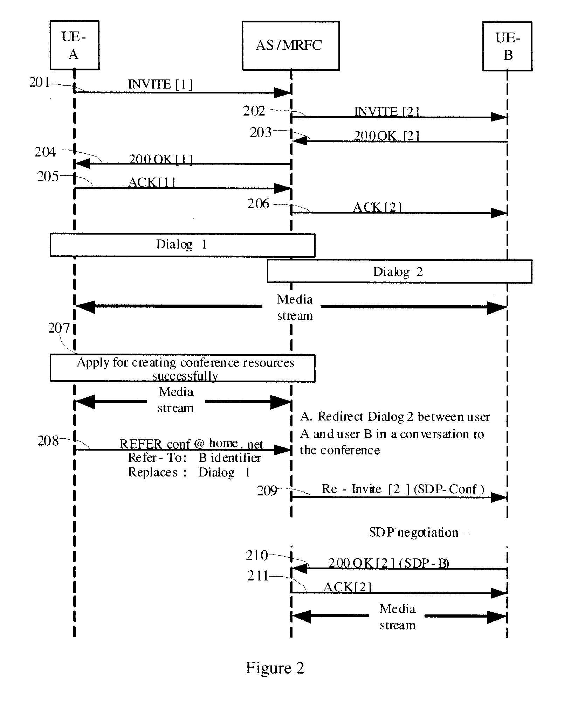

In the first embodiment of the invention shown in Figure 2, the called party and the calling party are SIP users, and UE-A (a SIP user) has subscribed to the third party control service. In this embodiment of the invention, UE-A and UE-B (both are SIP users) set up a conversation. After applying for conference resources and creating a conference successfully, UE-A may originate a third party control operation, namely, REFER operation, to invite UE-B to the conference. This embodiment of the invention includes:
Step 201: UE-A makes a call to UE-B, and originates a SIP INVITE [1] message, where the dialog identifier is assumed as Dialog 1. The INVITE [1] in Figure 2 represents the SIP INVITE message of Dialog 1.
Step 202: The AS handling the CONF service receives the SIP INVITE[1] message, uses the B2BUA mechanism to terminate the dialog, and sends a SIP INVITE[2] message to UE-B again to originate a new dialog. The dialog identifier in the SIP INVITE[2] message is assumed as Dialog 2.
Step 203: UE-B receives the SIP INVITE[2] message, and replies to it by sending a 200 OK[2] response code.
Step 204: The AS handling the CONF service receives the 200 OK[2] response code, converts it into a 200 OK[1] response code, and sends it to the calling UE-A.
Step 205: UE-A receives the 200 OK[1] response code, and originates an ACK[1] message.
Step 206: The AS handling the CONF service receives the ACK[1] message, converts it into an ACK[2] message, and sends it to the called UE-B.

In this embodiment of the invention, the AS handling the CONF service is added into the signaling path of the call originated by UE-A (a SIP user) to the called user. The AS adopts the B2BUA mechanism, creates a dialog identified as Dialog 1 with the calling user, and creates a dialog identified as Dialog 2 with the called user.

After the dialog between UE-A and UE-B is created successfully, the conversation may begin, and media streams may be transmitted between the user terminals.
Step 207: UE-A applies for conference resources, and creates a conference successfully. The process of creating a conference is implemented through the prior art, and is not described further.
Step 208: UE-A originates a SIP REFER operation to invite UE-B to join in the created conference. In the service operation information, namely, the SIP REFER message, Request-URI is set to the resource identifier of the created conference, for example, conf@home.net, also known as a third party identifier; Refer-To is set to the identifier of UE-B, namely, the peer identifier in the call set up between UE-A and the conference resource; and the Replaces parameter is set to the dialog identifier "Dialog 1", namely, the first dialog identifier of the call. The settings of the REFER message indicate the conference is expected to originate a dialog request to invite UE-B to the conference.
Step 209: The AS handling the CONF service receives the SIP REFER message and parses it. According to the B2BUA mechanism, the AS determines that Dialog 1 set in the Replaces parameter corresponds to Dialog 2 of the called party, and adds Dialog 2 of UE-B to the created conference through the redirection technology. This dialog is the first dialog corresponding to the Dialog 1 identifier. The AS sends the SIP INVITE[2] message to UE-B again (this SIP INVITE[2] message sent again is also known as Re-INVITE message, as shown by Re-Invite[2] in the figure). The message carries the Session Description Protocol (SDP) information of the created conference, that is, Dialog 1 is redirected to the third party (conference resource) identified by the third party identifier.

In the first embodiment of the invention, the GRUU mechanism is not applied. Therefore, through the setting of the Replaces parameter, the AS in the embodiment of the invention may uniquely locate the dialog of the called party to be redirected, even if the called party has multiple registered terminals and multiple concurrent dialogs.

After receiving the SIP Re-INVITE[2] message, UE-B and the AS negotiate the SDP information of both parties as against the SDP information of the conference carried in this message. The negotiation process is implemented through the prior art, and is not described further.
Step 210: UE-B replies to the INVITE[2] message by sending a 200 OK[2] response code.
Step 211: The AS receives the 200 OK[2] response code, and sends an ACK[2] message. The process of redirecting Dialog 2 between the AS and UE-B is finished, Dialog 2 previously created by UE-B is redirected to the created conference, and the peer SDP information of Dialog 2 which previously belongs to UE-A now belongs to the conference, that is, UE-B joins the conference.

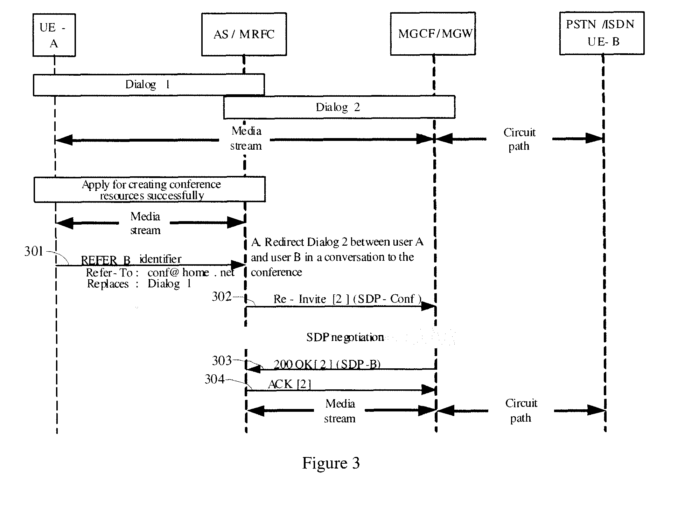

Figure 3 shows the second embodiment of the invention. In this embodiment of the invention, UE-A (a SIP user) is a service subscriber, and sets up a conversation with user B (a PSTN/ISDN user). After applying for conference resources and creating a conference successfully, UE-A originates a REFER operation to invite user B to the conference.

In the second embodiment of the invention, the signaling path of the call originated by UE-A to user B (a PSTN/ISDN user) passes through the AS handling the CONF service. The AS uses the B2BUA mechanism to create two dialogs: Dialog 1 with the calling UE-A, and Dialog 2 with the MGCF.

After setting up a conversation with user B successfully, UE-A applies for conference resources and creates a conference successfully.

Afterward, UE-A originates a REFER operation to invite user B to the created conference, including:
Step 301: UE-A originates a SIP REFER operation. In the second embodiment, the REFER message is set in a different way from the first embodiment, and makes the called user join the conference: (i) Request-URI is set as the identifier of user B, namely, the peer identifier in the call between UE-A and user B; (ii) Refer-To is set as the identifier of the created conference - conf@home.net, namely, the third party identifier; and (iii) the Replaces parameter is set as the identifier of Dialog 1. The settings of the REFER message indicate user B is expected to originate a dialog request to join the conference.
Step 302: The AS handling the CONF service receives the SIP REFER message and parses it. According to the B2BUA mechanism, the AS determines that Dialog 1 set in Replaces corresponds to Dialog 2 of the called party, and uses the redirection technology to add Dialog 2 to the created conference, that is, redirects Dialog 2 to a third party corresponding to the third party identifier. The AS sends a Re-INVITE[2] message to the MGCF corresponding to the called user B, carrying the SDP information of the created conference.

After receiving the SIP Re-INVITE[2] message, the MGCF and the AS negotiate the SDP information of both parties as against the SDP information of the conference carried in this message. The negotiation process is implemented through the prior art, and is not described further.
Step 303: The MGCF replies to the SIP Re-INVITE[2] message by sending a 200 OK[2] response code.
Step 304: The AS receives the 200 OK[2] response code, and sends an ACK[2] message. The redirection of Dialog 2 between AS and MGCF (user B) is finished, and user B joins the conference.

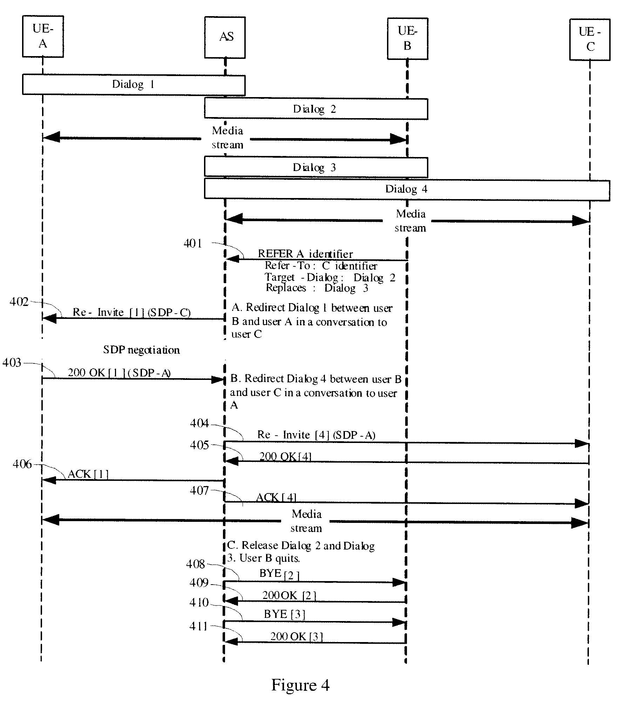

Figure 4 shows the third embodiment of the invention. UE-B (a SIP user) is a service subscriber. A conversation is set up between UE-A and UE-B, and a conversation is set up between UE-B and UE-C. UE-B originates a third party control REFER operation so that a conversation is set up between UE-A and UE-C, and UE-B quits the conversation previously set up with UE-A and UE-C.

In the third embodiment, the call signaling path between UE-B and UE-A passes through the AS handling the ECT service, and the AS uses the B2BUA mechanism to create two dialogs: Dialog 1 with UE-A and Dialog 2 with UE-B; likewise, the call signaling path between UE-B and UE-C passes through the AS handling the ECT service, and the AS uses the B2BUA mechanism to create two dialogs: Dialog 3 with UE-B, and Dialog 4 with UE-C.

UE-B originates a REFER operation so that a conversation is set up between UE-A and UE-C, including:
Step 401: UE-B originates a SIP REFER operation. In the REFER message of this SIP REFER operation, Request-URI is set as the identifier of UE-A, Refer-To is set as the identifier of UE-C, Target-Dialog is set as the identifier of Dialog 2, and the Replaces parameter is set as the identifier of Dialog 3. The settings of the REFER message indicate UE-A is expected to send a call request to UE-C.

As described in the second embodiment, this REFER message may achieve the same effect in another way: Request-URI is set as the identifier of UE-C, Refer-To is set as the identifier of UE-A, Target-Dialog is set as the identifier of Dialog 3, and the Replaces parameter is set as the identifier of Dialog 2, indicating UE-C is expected to send a call request to UE-A.
Step 402: The AS handling the ECT service receives the SIP REFER message and parses it. According to the B2BUA mechanism, the AS determines that Dialog 2 set in Target-Dialog corresponds to Dialog 1 of UE-A, and redirects Dialog 1 to UE-C. The AS sends a Re-INVITE[1] message to UE-A, carrying the SDP information of UE-C.

After receiving the SIP Re-INVITE[1] message, UE-A and the AS negotiate the SDP information of both parties as against the SDP information of UE-C carried in the message. The negotiation process is implemented through the prior art, and is not described further.
Step 403: UE-A replies to the INVITE[1] message by sending a 200 OK[1] response code.
Step 404: After receiving the 200 OK[1] response code, the AS obtains the negotiated SDP information of UE-A. According to the B2BUA mechanism, the AS determines that Dialog 3 set in the Replaces parameter corresponds to Dialog 4 of UE-C. The AS redirects Dialog 4 to UE-A, and sends a Re-INVITE[4] message to UE-C, carrying the negotiated SDP information of UE-A.
Step 405: UE-C receives the SIP Re-INVITE[4] message, and replies to it by sending a 200 OK[4] response code.
Step 406: The AS receives the 200 OK[4] response code, and sends an ACK[1] message to UE-A.
Step 407: The AS sends an ACK [4] message to UE-C.

A call is already set up between UE-A and UE-C. Through the B2BUA mechanism, the AS creates two dialogs: Dialog 1 with UE-A and Dialog 4 with UE-C.

The AS needs to quit UE-B from the previously created Dialog 2 which is correlated to UE-A and from Dialog 3 which is correlated to UE-C.
Step 408: The AS sends a SIP BYE[2] message and releases Dialog 2.
Step 409: UE-B receives the BYE[2] message, releases Dialog 2 and sends a 200 OK[2] response code.
Step 410: The AS sends a SIP BYE[3] message and releases Dialog 3.
Step 411: UE-B receives the BYE[3] message, releases Dialog 3 and sends a 200 OK[3] response code.

In the foregoing embodiment of the invention, the AS handling the CONF or ECT service acts as the B2BUA and resides in the call signaling path of the subscriber beforehand; according to the dialog identifier set in Replaces/Target-Dialog in the SIP REFER message originated by the subscriber, the AS uniquely locates the dialog to be redirected through the B2BUA mechanism, thus making the GRUU mechanism unnecessary for locating the terminal; moreover, the AS redirects the dialog that needs to be redirected so that other user terminals/MGCF involved in the service can finish service processing by only handling basic SIP Re-INVITE messages, without supporting the operations such as REFER/Refer-To and Replaces.

It should be noted that the present invention is applicable not only to the CONF service and the ECT service, but also to all services where the SIP REFER operation is used for third party control. In scenarios where a service subscriber is already in a call relation with another SIP UA (a second SIP UA), the service subscriber originates a REFER operation. The REFER message carries: a SIP UA identifier set in Request-URI or Refer-To (namely, the peer identifier of the service subscriber in this call relation); a third party SIP UA identifier set in Refer-To or Request-URI; and a dialog identifier in this call relation. After receiving the REFER message, the AS redirects the dialog corresponding to the dialog identifier to the third party through the redirection technology, with a view to setting up a call relation between the two SIP UAs. In this way, the service subscriber performs third party control. For example, for a CONF service, a subscriber already sets up call relations with the conference resources and user B respectively. Through the third party control of SIP REFER, the subscriber may set up a call relation between user B and the conference resources, that is, let user B join the conference.

In the foregoing CONF service and ECT service, because the service subscriber already sets up a call relation with the third party SIP UA concurrently, a call relation can be set up between the two SIP UAs only through a redirection operation.

Besides, the embodiments of the invention are applicable in scenarios where no call relation is set up between a service subscriber and a third party SIP UA. In this case, after originating third party control, the service subscriber needs to set up a new call relation with the third party so that the AS can redirect the second-party SIP UA to the third party and set up a call relation between the two SIP UAs. This is also a call transfer service, that is, the call transfer service may replace an ECT service which already carries calls, or originate the transfer of a new call.

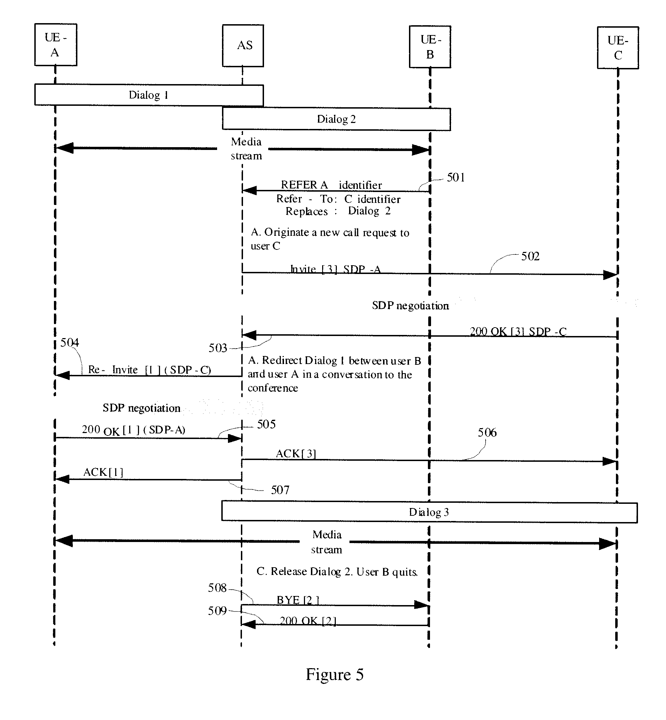

Figure 5 shows the fourth embodiment of the invention, where UE-B (a SIP user) is a service subscriber; a conversation is set up between UE-A and UE-B, and UE-B originates a third party control REFER operation so that a conversation is set up between UE-A and UE-C and that UE-B quits the conversation previously set up with UE-A.

In the fourth embodiment of the invention, the call signaling path between UE-B and UE-A passes through the AS handling the call transfer service. The AS uses the B2BUA mechanism to create two dialogs: Dialog 1 with UE-A, and Dialog 2 with UE-B.

UE-B originates a REFER operation so that a conversation is set up between UE-A and UE-C, including:
Step 501: UE-B originates a SIP REFER operation. In the REFER message, the Request-URI that indicates the request destination is set as the identifier of UE-A, namely, the peer identifier in the call; the Refer-To parameter that indicates a reference destination is set as the identifier of UE-C, namely, a third party identifier; and the Replaces parameter is set as the identifier of Dialog 2. The settings of the REFER message indicate UE-A is expected to send a call request to UE-C.
Step 502: The AS handling the call transfer service receives the SIP REFER message and parses it. In the fourth embodiment of the invention, no call is set up between UE-B and UE-C beforehand, and the REFER message cannot be sent to UE-A directly. Therefore, the AS needs to originate a new call request to UE-C. The AS sends a SIP INVITE[3] message, carrying the SDP information of UE-A.

The AS and UE-C perform SDP negotiation.
Step 503: UE-C replies by sending a 200 OK[3] response code, carrying the SDP information of UE-C.
Step 504: According to the B2BUA mechanism, the AS determines that Dialog 2 set in the Replaces parameter corresponds to Dialog 1 of UE-A, and redirects Dialog 1 to UE-C. The AS sends a Re-INVITE[1] message to UE-A, carrying the SDP information of UE-C.

After receiving the SIP Re-INVITE[1] message, UE-A and the AS negotiate the SDP information of both parties as against the SDP information of UE-C carried in the message. The negotiation process is implemented through the prior art, and is not further described.
Step 505: UE-A replies to the INVITE[1] message by sending a 200 OK[1] response code.
Step 506: The AS receives the 200 OK[1] response code, and sends an ACK[1] message to UE-A.
Step 507: The AS sends an ACK[3] message to UE-C.

A call is already set up between UE-A and UE-C. Through the B2BUA mechanism, the AS creates two dialogs: Dialog 1 with UE-A and Dialog 3 with UE-C.

As indicated by the REFER message, the AS needs to quit UE-B from the previously created Dialog 2 which is correlated to UE-A. Step 508: The AS sends a SIP BYE[2] message and releases Dialog 2.
Step 509: UE-B receives the BYE[2] message, releases Dialog 2 and sends a 200 OK[2] response code.

In the fourth embodiment of the invention, no call is set up between UE-B and UE-C beforehand; therefore, as required by the INVITE method carried in the SIP REFER message, the AS needs to originate a new INVITE call to UE-C. In the third embodiment of the invention, a call is already set up between UE-B and UE-C beforehand; therefore, as required by the INVITE method carried in the SIP REFER message, the INVITE is a redirected call. In other aspects, the process of the third embodiment is basically the same as the process of the fourth embodiment of the invention.

It should noted that the call relation set up by a service subscriber beforehand does not necessarily require the service subscriber to stay in the conversation state. The service subscriber may be in these states: ringing, hearing a ring back tone, and call hold.

It should also be noted that in the foregoing embodiments, the AS is in the call relation set up by the service subscriber. The AS may be in the home network of the service subscriber or the home network of the peer user in the call relation. For example, in the fourth embodiment, the AS may be in the home network of UE-B or the home network of UE-A. If the AS is in the home network of UE-A, the dialog identifier set in Replaces in the REFER operation originated by UE-B is Dialog 2, which is identifiable by the home network of UE-B. Therefore, when the REFER message is routed from the home network of UE-B to the AS in the home network of UE-A, if the route passes through other B2BUA network elements in the existing call relation between UE-B and UE-A, such network elements must replace the dialog identifier set in Replaces in a back-to-back way according to the B2BUA mechanism so that the REFER message can be identified by the AS upon arriving at the AS in the home network of UE-A.

Besides, the operation of the third party control service originated by the service subscriber is not necessarily a REFER message. It may be any other operation message. After receiving the operation message, the home network of the service subscriber translates it into a REFER message and sends it out. For example, in scenarios where the terminal of a service subscriber is not a SIP terminal and cannot send a REFER message out, the originated third party control service operations such as analog hook signal and digital subscriber signal need to be translated by the home network of the service subscriber into a REFER message, which is further processed by the AS. Alternatively, other SIP messages bring the same effect as the REFER message in special scenarios. For example, a service subscriber already sets up call relations with two SIP UAs respectively; the service subscriber goes on-hook; the AS receives the SIP BYE message and redirects the two dialogs corresponding to the two call relations set up by the service subscriber so that a call relation is set up between the two SIP UAs; and the AS quits the service subscriber from the dialogs. In this case, the BYE message contains no service operation information that indicates third party control. The AS obtains the service operation information (the dialog identifiers corresponding to the two existing call relations and the peer user identifier) from the current dialog scenario of the service subscriber according to the current specific scenario (two call relations have been set up) and the subscription rights of the service subscriber (for example, subscribing to the ECT service).

The present invention makes it unnecessary for the MGCF to support the SIP REFER message, imposes no special requirements on other user terminals involved in the service, and does not need to support the operations such as REFER/Refer-To, Replaces and Target-Dialog but only requires support of the basic SIP protocol mechanism. The invention does not require the GRUU mechanism; instead, the AS handling the CONF service or the ECT service acts as a B2BUA and resides in the call signaling path of the subscriber beforehand, intercepts the SIP REFER operation originated by the subscriber, and uses the redirection technology to implement the CONF and ECT services. Hence, the invention may simplify the service implementation process and facilitate the service promotion.

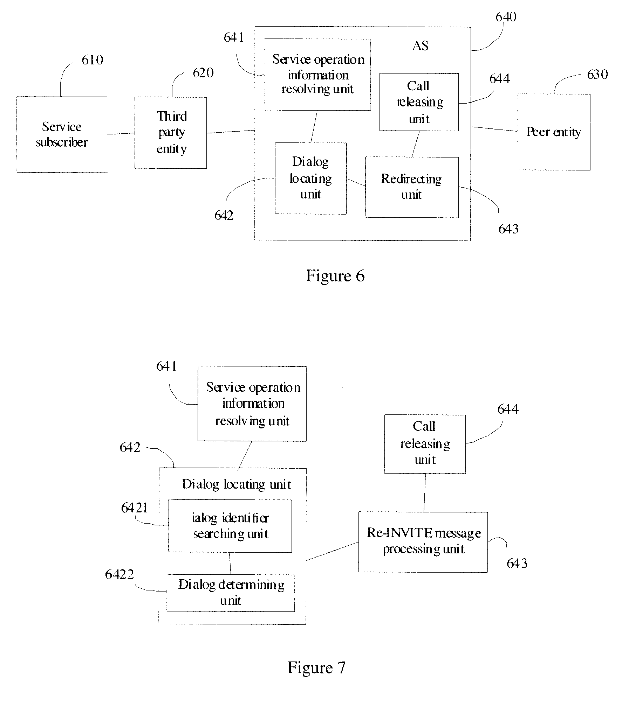

Figure 6 is a block diagram of the packet-switched network system in an embodiment of the present invention.

A packet-switched network system may provide services for a service subscriber 610. The system includes a third party entity 620, a peer entity 630 already in a call relation with the service subscriber 610, and an AS 640 which resides in the call signaling path and handles the service.

The AS 640 includes: a service operation information parsing unit 641, adapted to parse the received service operation information corresponding to the operation originated by the service subscriber 610, the service operation information including a first dialog identifier and a third party identifier; a dialog locating unit 642, adapted to locate the first dialog that corresponds to the first dialog identifier and needs to be redirected, according to a B2BUA mechanism; and a redirecting unit 643, adapted to redirect the first dialog that needs redirection according to the third party identifier.

Specifically, the operation of redirecting the first dialog is: redirecting the first dialog to the third party entity 620 corresponding to the third party identifier.

Moreover, the AS further includes a call releasing unit 644, adapted to release the call between the service subscriber 610 and the peer entity 630 of the first dialog, and/or release the call between the service subscriber 610 and the third party entity 620.

When the third party applies for resources of the created conference for the service subscriber, the specific redirection operation of the AS 640 is to let the peer entity 630 of the call set up with the service subscriber in the first dialog join the conference, that is, the service implemented here is a CONF service. Referring to Figure 7. An embodiment of the AS in this scenario is as follows:

The service operation information parsed by the service operation information parsing unit 641 corresponds to the SIP REFER operation originated by the service subscriber, and this service operation information is carried in a SIP REFER message.

Specifically, the first dialog identifier (for example, Dialog-1) is set in the Replaces parameter and/or the Target-Dialog parameter of the SIP REFER message; the third party identifier is set in the Request-URI parameter or the Refer-To parameter of the SIP REFER message; the SIP REFER message also includes the peer identifier set in the Refer-To parameter or the Request-URI parameter.

According to the B2BUA mechanism, the dialog locating unit 642 determines the third dialog identifier (for example, Dialog-2) corresponding to the first dialog identifier (for example, Dialog-1), and determines the dialog indicated by the third dialog identifier as the first dialog to be redirected. In this case, the dialog locating unit 642 may include a dialog identifier searching unit 6421 and a dialog determining unit 6422 in the specific implementation.

The redirecting unit 643 originates a Re-INVITE message to the peer entity 630 of the first dialog to set up a call relation between the peer entity 630 and the third party entity 620 corresponding to the third party identifier. In this case, the redirecting unit 643 may be a Re-INVITE message processing unit.

In the specific implementation, the peer may be a SIP user or an MGCF corresponding to a PSTN/ISDN user.

The AS in this embodiment of the invention is also applicable to ECT services. In this case, the peer entity corresponding to the first dialog identifier and the third party entity corresponding to the third party identifier may be already in a call relation with the service subscriber. See Figure 7 again. Another embodiment of the AS in this scenario is follows:

The service operation information parsed by the service operation information parsing unit 641 corresponds to the SIP REFER operation originated by the service subscriber, and this service operation information is carried in a SIP REFER message.

Specifically, the first dialog identifier (for example, Dialog-1) is set in the Replaces parameter of the SIP REFER message; the third party identifier is set in the Request-URI parameter of the SIP REFER message; the SIP REFER message further includes the peer identifier set in the Refer-To parameter and the second dialog identifier (for example, Dialog-2) set in the Target-Dialog parameter.

Alternatively, such information may be set in this way: The first dialog identifier (for example, Dialog-1) is set in the Target-Dialog parameter of the SIP REFER message; the third party identifier is set in the Refer-To parameter of the SIP REFER message; the SIP REFER message further includes the peer identifier set in the Request-URI parameter and the second dialog identifier (for example, Dialog-2) set in the Replaces parameter.

The dialog locating unit 642 searches for the fourth dialog identifier corresponding to the second dialog identifier according to the B2BUA mechanism, and determines the dialog corresponding to the fourth dialog identifier as the second dialog that needs redirection; searches for the third dialog identifier corresponding to the first dialog identifier according to the B2BUA mechanism, and determines the dialog corresponding to the third dialog identifier as the first dialog that needs redirection. In this case, the dialog locating unit 642 may include a dialog identifier searching unit 6421 and a dialog determining unit 6422 in the specific implementation.

The redirecting unit 643 originates a Re-INVITE message to the third party entity 620 corresponding to the second dialog to set up a dialog between the AS and the third party entity 620 corresponding to the third party identifier; originates a Re-INVITE message to the peer entity 630 corresponding to the first dialog to set up a dialog between the AS and the peer, thus implementing a call relation between the peer and the third party. In this case, the redirecting unit 643 may be a Re-INVITE message processing unit.

In the specific implementation, the peer entity 630 and the third party entity 620 may be a SIP user or an MGCF corresponding to a PSTN/ISDN user.

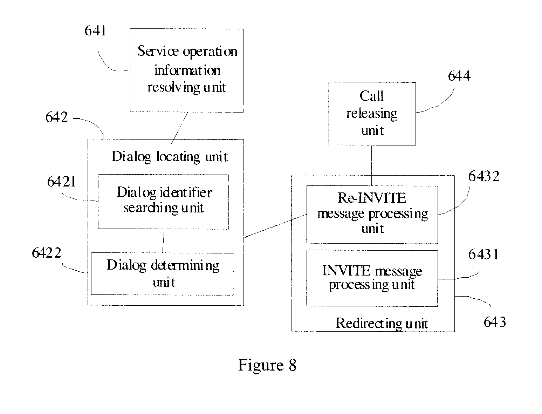

When the AS in this embodiment is applied to the ECT service, one scenario is: The peer corresponding to the first dialog identifier is already in a call relation with a service subscriber, and the third party corresponding to the third party identifier is not in any call relation with the service subscriber. See Figure 8. An embodiment of the AS in this scenario is as follows:

The service operation information parsed by the service operation information parsing unit 641 corresponds to the SIP REFER operation originated by the service subscriber, and this service operation information is carried in a SIP REFER message.

Specifically, the first dialog identifier (for example, Dialog-1) is set in the Replaces parameter of the SIP REFER message; the third party identifier is set in the Request-URI parameter of the SIP REFER message; the SIP REFER message further includes the peer identifier set in the Refer-To parameter.

Alternatively, such information may be set in this way: The first dialog identifier (for example, Dialog-1) is set in the Target-Dialog parameter of the SIP REFER message; the third party identifier is set in the Refer-To parameter of the SIP REFER message; the SIP REFER message further includes the peer identifier set in the Request-URI parameter.

According to the B2BUA mechanism, the dialog locating unit 642 searches for the third dialog identifier corresponding to the first dialog identifier, and determines the dialog corresponding to the third dialog identifier as the first dialog that needs redirection. In this case, the dialog locating unit 642 may include a dialog identifier searching unit 6421 and a dialog determining unit 6422 in the specific implementation.

The redirecting unit 643 originates a SIP INVITE message to the third party entity 620 corresponding to the third party identifier, and sets up a call with the third party; on this basis, the redirecting unit originates a Re-INVITE message to the peer entity 620 corresponding to the first dialog to set up a dialog between the AS and the peer, thus implementing a call relation between the peer entity 630 and the third party entity 620. In this case, the redirecting unit 643 includes an INVITE message processing unit 6431 and a Re-INVITE message processing unit 6432.

In the specific implementation, the peer entity and the third party entity may be a SIP user or an MGCF corresponding to a PSTN/ISDN user.

It should be understood that the foregoing description about the embodiments of the invention is detailed but does not constitute a limitation to the scope of protection of the present invention. The scope of protection of the present invention shall be governed by the following claims and their equivalents.

## Claims

1. A method for implementing third-party control services, comprising:
receiving, by an application server (AS) handling the service, service operation information corresponding to the operation of a third-party control service originated by a service subscriber, wherein the service operation information comprises a first dialog identifier and a third party identifier of a call set up by the subscriber;
locating a first dialog that corresponds to the first dialog identifier and needs to be redirected, according to a back-to-back user agent (B2BUA) mechanism; and
redirecting the first dialog that needs to be redirected according to the third party identifier.

2. The method of claim 1, wherein the operation of redirecting the dialog that needs to be redirected according to the third party identifier is to redirect the first dialog to a third party corresponding to the third party identifier.

3. The method of claim 2, wherein the AS acts as a B2BUA and resides in the signaling path of the call set up by the service subscriber; the service operation information also comprises a second dialog identifier of a call set up between the service subscriber and the third party; this method further comprises:
by the AS according to the B2BUA mechanism, locating a second dialog corresponding to the second dialog identifier and redirecting the second dialog.

4. The method of claim 1, wherein the AS acts as a B2BUA and resides in the signaling path of the call set up by the service subscriber; the redirection operation comprises: setting up, by the AS, a call relation with the third party corresponding to the third party identifier.

5. The method of any of claims 1 to 4, wherein the operation of the third-party control service originated by the service subscriber is a SIP REFER operation, or an operation that may be converted into a SIP REFER operation through the home network of the service subscriber; and the service operation information is included in the SIP REFER message corresponding to the operation.

6. The method of claim 5, wherein the dialog identifier is set in the Replaces parameter and/or the Target-Dialog parameter of the SIP REFER message.

7. The method of claim 5, wherein the third party identifier is set in the Request-URI (request destination) parameter or the Refer-To (reference destination) parameter of the SIP REFER message; and the SIP REFER message also comprises a peer identifier set in the Refer-To parameter or the Request-URI parameter.

8. The method of claim 5, wherein the redirection operation comprises:
originating, by the AS, a Re-INVITE message.

9. The method of any of claims 1 to 4, wherein receiving service operation information comprises: obtaining, by the AS, the corresponding service operation information from the current dialog scenario of the service subscriber.

10. The method of any of claims 1 to 4, wherein the third party control service is a CONF service or an explicit call transfer service.

11. An application server, comprising:
a service operation information parsing unit, adapted to parse the received service operation information comprising a first dialog identifier and a third party identifier;
a dialog locating unit, adapted to locate a first dialog that corresponds to a first dialog identifier and needs to be redirected according to a back-to-back user agent (B2BUA) mechanism; and
a redirecting unit, adapted to redirect the first dialog that needs to be redirected according to the third party identifier.

12. The application server of claim 11, wherein the dialog locating unit comprises:
a dialog identifier searching unit, adapted to determine a third dialog identifier corresponding to the first dialog identifier according to the B2BUA mechanism; and
a dialog determining unit, adapted to determine a dialog indicated by the third party dialog identifier as the first dialog that needs to be redirected.

13. The application server of claim 11, wherein the service operation information further comprises a second dialog identifier; and the dialog locating unit comprises:
a dialog identifier searching unit, adapted to search for a fourth dialog identifier corresponding to the second dialog identifier according to the B2BUA mechanism, and search for a third dialog identifier corresponding to the first dialog identifier according to the B2BUA mechanism; and
a dialog determining unit, adapted to determine that a dialog corresponding to the fourth dialog identifier is the second dialog that needs to be redirected; and determine that the dialog corresponding to the third dialog identifier is the first dialog that needs to be redirected.

14. The application server of claim 11, further comprising: a call releasing unit, adapted to release the call between the service subscriber and a peer entity of the first dialog, and/or release the call between the service subscriber and the third-party entity.

15. The application server of any of claims 11 to 14, wherein the service operation information parsed by the service operation information parsing unit corresponds to the SIP REFER operation originated by the service subscriber, and this service operation information is carried in a SIP REFER message.

16. A packet-switched network system, comprising: a third-party entity, a peer entity which is already in a call with a service subscriber, and an application server (AS) handling the service and resides the call signaling path, wherein the AS comprises:
a service operation information parsing unit, adapted to parse the received service operation information comprising a first dialog identifier and a third party identifier;
a dialog locating unit, adapted to locate a first dialog that corresponds to the first dialog identifier and needs to be redirected according to a back-to-back user agent (B2BUA) mechanism; and
a redirecting unit, adapted to redirect the first dialog that needs redirection according to the third party identifier.

17. The system of claim 16, wherein the dialog locating unit comprises:
a dialog identifier searching unit, adapted to determine a third dialog identifier corresponding to the first dialog identifier according to the B2BUA mechanism; and
a dialog determining unit, adapted to determine the dialog indicated by the third party dialog identifier as the first dialog that needs to be redirected.

18. The system of claim 16, wherein the service operation information further comprises a second dialog identifier; and the dialog locating unit comprises:
a dialog identifier searching unit, adapted to search for a fourth dialog identifier corresponding to the second dialog identifier according to the B2BUA mechanism, and search for the third dialog identifier corresponding to the first dialog identifier according to the B2BUA mechanism; and
a dialog determining unit, adapted to determine that the dialog corresponding to the fourth dialog identifier is the second dialog that needs to be redirected; and determine that the dialog corresponding to the third dialog identifier is the first dialog that needs to be redirected.
